**Europäisches Patentamt**

(19) **European Patent Office**

**Office européen des brevets**

(11) Publication number: **0 176 169**
**A2**

## (12) EUROPEAN PATENT APPLICATION

(21) Application number: **85303647.3**

(22) Date of filing: **23.05.85**

(51) Int. Cl.⁴: **F 41 G 1/32**

(30) Priority: **24.05.84 GB 8413302**

(43) Date of publication of application:
**02.04.86 Bulletin 86/14**

(84) Designated Contracting States:
**AT BE CH DE FR GB IT LI NL SE**

(71) Applicant: **LASERGAGE LIMITED**
**Newtown Road**
**Hove East Sussex BN3 7DZ(GB)**

(72) Inventor: **Oulabi, Joerg**
**28 Mead Way**
**Rustington Sussex(GB)**

(72) Inventor: **Huxford, Roger Brian**
**26 Park Close**
**Burgess Hill Sussex(GB)**

(74) Representative: **Colgan, Stephen James et al,**
**CARPMAELS & RANSFORD 43 Bloomsbury Square**
**London WC1A 2RA.(GB)**

(54) **Optical instruments.**

(57) Optical instruments having electrical components which require activation prior to use, such as weapons night-sights, and a compressible eye guard which, when compressed, activates a means for activating the electrical components. Typically the electrical component is an image intensifier and the activating means comprises a set of fixed reed switches on the instrument switched on by a set of magnets secured in the bellows of the compressible eye guard.

EP 0 176 169 A2

<u>OPTICAL INSTRUMENTS</u>

This invention relates to optical instruments having one or more electrical components which require activation before the instrument can be used.  It relates particularly to instruments such as weapons night-sights having an eye guard, one function of which is to prevent light from within the instrument from escaping  and illuminating the operator.

A problem encountered with weapon night-sights is that they generate their own light which, if allowed to escape, will illuminate the face of the operator and make him a visible target for an enemy.  Previously this has been overcome by providing a rubber eye guard with internal flaps which, when relaxed, close the eyepiece.  The operator places the eye guard to his face and the shape of the guard is such as to form an optical seal with the face.  The operator then presses the instrument firmly against his face and this action causes the flaps to open.  Conversely, in removing the eye from the instrument, the flaps seal before the eye guard is removed from the face.  Thus one seal is made before the other is broken.

A problem with such a device is that frequently only one of the flaps, or some but not all of them, will open.  For instance, on rifles, the eye is often not pressed squarely against the eyepiece and may only compress one side, thus opening the flaps only partially.

Weapons night-sights function by use of electronic image amplification, for example by use of an image intensifier or thermal imager.  Often the electronic circuitry is switched on even when the eyepiece is closed by the flaps.  This is wasteful of power and batteries used at present in such devices typically have a life of only 30 hours.

The present invention is concerned with providing an optical instrument which overcomes these problems.

According to the invention there is provided an optical instrument having an electrical component which requires activation before the instrument can be used, a compressible eye guard for viewing the instrument, and means for activating said components, said activating means being actuated when the eye guard is compressed.

Preferably the activating means comprises a switch means, particularly one or more capable of acting as a proximity detector to determine whether or not the eye guard is compressed. The switching may be, for example, mechanical, magnetic, or capacitive. Preferably reed switches are employed which are actuated by magnets which move relative to the reed switches when the eye guard is compressed.

The invention need not be limited to night-sights but may be applied to any optical instrument for which it is advantageous to limit the consumption of power to times when the operator is looking into the instrument or to an optical instrument from which the escape of light might be undesirable such as for example in a photographic dark room.

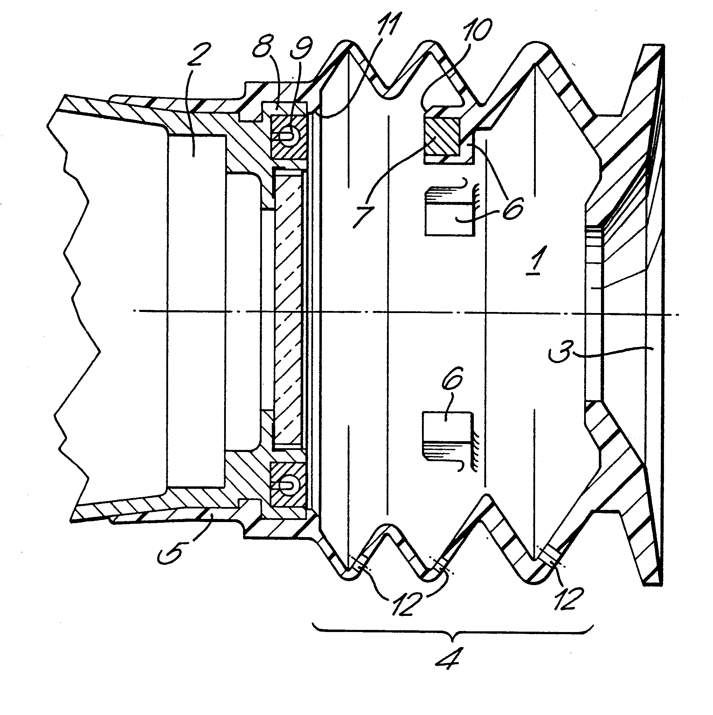

A preferred embodiment of the present invention will now be described, by way of example, with reference to the accompanying drawing which is a vertical cross-section through the axis of a rifle night-sight according to the invention, with parts of the night-sight omitted for clarity.

Referring to the drawing, the night-sight comprises an eye guard (1) of elastomer material extending from an eyepiece (2). The eyepiece (2) enables the operator to view an image intensifier of conventional type, not shown in the drawing. The eye guard (1) has a conical ring (3) to accommodate the eye; a section in the form of cylindrical bellows (4); and a cylindrical sleeve (5) for securing the eye guard (1) to the eyepiece (2). Moulded inside the bellows and symmetrically disposed on the circumference of a circle transverse to the optical axis of the instrument are five pockets (6) - one of which is shown in section - and into each of which is secured a magnet (7). The magnets have one pole facing the eyepiece (2). Around the circumference of the rear face of the eyepiece is an annular channel (8) into which are secured five normally-open reed switches (9) in radial positions adjacent the five magnets (7).

The outer face of the eyepiece (2) and the outer edge of each pocket (6) are chamfered to provide complementary frusto-conical guide surfaces (10) and (11) to assist in accurately positioning the magnets over the reed switches when the bellows (4) are compressed. Holes (12) are provided in the bellows (4) to allow for free movement of air into and out of the bellows on compression and decompression.

The reed switches (9) are wired in parallel between the image intensifier and a battery therefor so that the closing of any one of the switches will switch on the image intensifier.

In operation, the eye is positioned against the ring (3) to view into the eyepiece. The night-sight is pressed against the face of the operator such that the bellows (4) are compressed. The thickness of the elastomer material of the bellows is less for the section of the bellows between the eyepiece and the magnets than for the section between the magnets and the eye. Thus, it is this former section which is compressed first and at least some of the magnets move to positions closely adjacent the reed switches, switching the latter on whereby to actuate the image intensifier. Thus the image intensifier is only activated after the eye guard (3) abuts the face of the operator, and power is only consumed when the operator is actually looking into the eyepiece. Furthermore, only one magnet is required to be closely adjacent its reed switch to actuate the image intensifier and the device will operate even if the eye guard (3) is compressed unevenly and unsymmetrically in contact with the observer's face.

CLAIMS:-

1. An optical instrument having an electrical component which requires activation before the instrument can be used, a compressible eye guard for viewing the instrument, and means for activating said component, said activating means being actuated when the eye guard is compressed.

2. An optical instrument according to claim 1 wherein said activating means comprises switch means.

3. An optical instrument according to claim 2, wherein the switch means is a proximity switch means capable of sensing and being actuated by said eye guard compression.

4. An optical instrument according to claim 2 or 3 wherein said switch means comprises at least one normally-open switch connected between the said electrical component and a power source therefor.

5. An optical instrument according to claim 4 comprising a plurality of said normally-open switches connected in parallel.

6. An optical instrument according to claim 5 wherein said switches are disposed symmetrically on the circumference of a circle transverse to the optical axis of the instrument.

7. An optical instrument according to any of claims 2 to 6 wherein said switch means comprises at least one reed switch and correspondingly at least one magnet movable relative to one another when the eye guard is compressed whereby said at least one magnet is capable of actuating its respective reed switch upon said compression.

8. An optical instrument according to claim 7 wherein said eye guard comprises a bellows of elastomeric material having one or more pockets therein to accommodate said one or more magnets.

9. An optical instrument according to claim 8 wherein said one or more reed switches are secured immovably on

0176169

the instrument and the one or more magnets move towards and away therefrom upon compression and decompression of said eye guard.

10. An optical instrument according to any of claims 1 to 9 when in the form of a weapon night-sight.